# EUROPÄISCHE PATENTANMELDUNG

(11) **EP 4 094 951 A1**
(43) Veröffentlichungstag der Anmeldung: **30.11.2022**
(21) Anmeldenummer: 22166581.3
(22) Anmeldetag: 04.04.2022
(51) Int. Cl.: B41M 3/00, B41M 5/00, B29C 64/112, B41M 3/16, B41M 7/00

(54) **VERFAHREN ZUM ERZEUGEN EINES RELIEFARTIGEN DRUCKBILDS AUF BEHÄLTERN**

(30) Priorität: 28.05.2021 DE 102021113824
(71) Anmelder: Krones AG, 93073 Neutraubling (DE)
(72) Erfinder: Augst, Peggy, 93073 Neutraubling (DE); Lyashenko, Alexandra, 93073 Neutraubling (DE)
(74) Vertreter: Grünecker Patent- und Rechtsanwälte PartG mbB

(57) **Zusammenfassung**

Beschrieben wird ein Verfahren zum Erzeugen eines reliefartigen Druckbilds auf Behältern, wobei Druckschichten mittels Strahlauftrag einer Druckfarbe, einer Tinte, eines Lacks oder eines Klebers aus wenigstens einem Druckkopf auf einem Behälter aufeinandergeschichtet und dadurch erhabene Bereiche des Druckbilds erzeugt werden. Dadurch, dass die Druckschichten jeweils im Volltondruck aufgetragen werden, können optische und haptische Effekte auf Behälteroberflächen mit geringem apparativen Aufwand und minimaler Anzahl von Druckschritten erzeugt werden.

## Beschreibung

Die Erfindung betrifft ein Verfahren zum Erzeugen eines reliefartigen Druckbilds auf Behältern gemäß Oberbegriff des Anspruchs 1 und einen derart bedruckten Behälter.

Ein gattungsgemäßes Verfahren ist aus der US 10,752,538 B1 und der WO 2018/209025 A1 bekannt. Demnach können im Tintenstrahldruckverfahren reliefartige Aufdrucke mittels durch UV-Bestrahlung / LED-Bestrahlung härtender Farben, Tinten oder Lacke (Varnish) erzeugt werden. Die US 10,752,538 B1 beschreibt diesbezüglich, dass erhabene Strukturen mittels Graustufendrucks / Halbtondrucks in verschiedenen Dicken aufgedruckt werden können.

Dieses Druckverfahren ist zwar einerseits flexibel zur Gestaltung unterschiedlichster 3-dimensionaler Strukturen einsetzbar, erfordert andererseits aber relativ komplexe Druckvorlagen und Steuerungsalgorithmen. Außerdem können nur bestimmte Tinten verwendet werden, und es werden auch demzufolge relativ viele Druckschritte für den Aufbau einer ausreichenden Gesamtschichtdicke benötigt.

Es besteht daher Bedarf für alternative Verfahren zur Erzeugung reliefartiger Strukturen auf ebenen zweidimensionalen Substraten, wie beispielsweise Etiketten, oder auf gekrümmten dreidimensionalen Substraten, wie beispielsweise auf Dosen, Flaschen, Bechern oder Tuben, gegebenenfalls auch auf Wandbereichen solcher Behälter mit reliefartiger Oberfläche.

Die gestellte Aufgabe wird mit einem Verfahren nach Anspruch 1 gelöst, ebenso mit einem derart bedruckten Behälter.

Das Verfahren dient demnach zum Erzeugen eines reliefartigen Druckbilds auf Behältern, wie beispielsweise Flaschen, Dosen, Bechern oder Tuben. Demnach werden Druckschichten aufeinandergeschichtet, indem eine Farbe, eine Tinte, ein Lack oder ein Kleber aus wenigstens einem Druckkopf auf einem Behälter nacheinander schichtweise mittels Strahlauftrag, also nach dem Prinzip des Tintenstrahldruckverfahrens, aufgebracht wird. Dadurch werden erhabene Bereiche des reliefartigen Druckbilds erzeugt. Erfindungsgemäß werden die Druckschichten dabei jeweils im Volltondruck aufgetragen.

Der Volltondruck ermöglicht einen besonders effizienten Schichtauftrag mit einer Vielzahl unterschiedlicher Farben, Tinten, Lacken und/oder Kleber. Anders gesagt lässt sich dadurch die Anzahl einzelner Druckschritte zum Aufbau des reliefartigen Druckbilds minimieren.

Vorzugsweise wird für wenigstens zwei der Druckschichten, insbesondere für alle Druckschichten, die gleiche Tropfengröße für den Strahlauftrag vorgegeben / eingestellt. Dies vereinfacht die Drucksteuerung und ermöglicht eine einheitliche Vorgabe größtmöglicher Tropfen und/oder des größten Tropfens.

Vorzugsweise wird das Druckbild in einem ersten Druckbereich mit einem ersten Schichtaufbau hergestellt, bei dem wenigstens zwei der Druckschichten, insbesondere alle Druckschichten, eine deckungsgleiche Kontur im Druckbild aufweisen. Damit lassen sich optisch und haptisch besonders markante Reliefstrukturen erzeugen.

Vorzugsweise wird das Druckbild in einem zweiten Druckbereich mit einem zweiten Schichtaufbau hergestellt, bei dem die Kontur im Druckbild insbesondere aller aufeinanderliegender Druckschichten sukzessive stufenartig kleiner wird. Das heißt, die jeweils übereinanderliegenden Druckschichten verkleinern sich in der Draufsicht auf das Druckbild zunehmend nach oben hin. Damit lassen sich optischen und haptischen Wirkungen der erzeugten Reliefstrukturen anpassen, beispielsweise an einen Untergrund mit einem Basis-Druckbild und/oder ein Substrat mit strukturierter und/oder reliefartiger Oberfläche.

Vorzugsweise werden die Druckschichten dann derart nacheinander aufgetragen, dass die Abstände zwischen ihren Konturgrenzen jeweils 1 bis 20 mm oder jeweils 1 bis 50 Pixel betragen. Der größere Wertebereich eignet sich besonders für dekorative flächige Reliefs, der kleinere Wertebereich besonders für Schriften, Symbole, Linien oder dergleichen Bestandteile des Druckbilds, ebenso für überlappend verzahnte Druckbildbereiche, sogenannte Stitching-Bereiche.

Vorzugsweise wird wenigstens eine der Druckschichten sukzessive aus mehreren identischen Einzelschichten aufgebaut. Dadurch können besonders feine Höhenabstufungen erzeugt und/oder Farben, Tinten, Kleber oder Lacke verarbeitet werden, die nur einen relativ dünnen Schichtauftrag pro Druckschritt zulassen.

Vorzugsweise werden Druckschichten mittels eines Binär-Druckkopfs und/oder mittels eines auf Volltondruck eingestellten Halbton-Druckkopfs hergestellt. Damit lässt sich zum einen der apparative Aufwand reduzieren, das Verfahren andererseits aber auch an Druckmaschinen anwenden, die auch für den Halbtondruck ausgelegt sind.

Vorzugsweise wird jede Druckschicht mit wenigstens einem separat zugeordneten Druckkopf erzeugt. Diese Variante eignet sich besonders für den Druck aus stationären Druckköpfen in der Peripherie eines Behälterkarussells oder dergleichen Transportmittel zum Transport der Behälter.

Denkbar ist auch, die Behälter in Druckmodulen zu bedrucken, bei denen Druckköpfe um den jeweiligen Behälter herum umfänglich verteilt sind. Der jeweilige Behälter wird dann beispielsweise von einem Greifer in das Zentrum des Druckmoduls geführt und dort bezüglich der Druccköpfe gedreht und so mehrfarbig bedruckt. Solche Druckmodule / Druckstationen können mitlaufend am Außenumfang eines Karussells oder stationär angeordnet sein. Ebenso denkbar ist eine lineare Aneinanderreihung solcher Druckstationen.

Vorzugsweise werden die Druckschichten mittels UV-Licht insbesondere aus wenigstens einer LED gehärtet. Dies ermöglicht eine schnelle Abfolge von Druckschritten für die einzelnen Druckschichten, beispielsweise zur Zwischenhärtung einzelner oder mehrerer Druckschichten, ebenso eine zur Weiterverarbeitung der Behälter geeignete Endhärtung des reliefartigen Druckbilds.

Das Druckbild könnte prinzipiell auch mit anderen Tinten aufgetragen werden, also mit solchen, die nicht durch UV-Bestrahlung aushärten, ebenso mittels anderer Druckverfahren.

Vorzugsweise werden die Druckschichten auf einem auf dem Behälter vorhandenen im Wesentlichen glatten Basis-Druckbild, beispielsweise einem Mehrfarbendruck, beispielsweise mit Single-Pass- oder Multi-Pass-Farbauftrag, aufgetragen. Hierunter ist ein Substrat ohne eigene reliefartige Konturierung zu verstehen. Das Substrat kann dann aber dennoch eine strukturierte Oberfläche beispielsweise im Sinne einer Mattierung oder Embossing aufweisen. Dies ermöglicht eine optische und/oder haptische Unterstützung / Hervorhebung des Basis-Druckbilds durch den erhabenen Schichtaufbau.

Vorzugsweise erzeugen die Druckschichten einen Farbkontrast und/oder Dickenkontrast (beispielsweise mehrschichtiger Schwarz-Druck) zum Basis-Druckbild. Neben haptischen Effekten wird so auch eine Vielzahl optischer Effekte ermöglicht.

Vorzugsweise werden die Druckschichten auf einer am Behälter reliefartig ausgebildeten Oberflächenstruktur aufgetragen. Dadurch kann deren Wahrnehmung optisch, beispielsweise durch Farbkontrast, und/oder haptisch auf flexibel anpassbare Weise verstärkt werden.

Vorzugsweise werden die erhabenen Bereiche durch Überlagerung der Druckschichten auf eine Gesamtschichtdicke von 50 µm bis 5 mm hergestellt. Die maximale Schichtdicke ist hierbei im Wesentlichen durch den maximal einstellbaren Druckabstand begrenzt, also durch die Konstruktion der jeweiligen Druckeinheit. Derartige Schichtdicken eignen sich besonders für erwünschte optische und haptische Effekte auf kommerziellen Produktverpackungen.

Vorzugsweise wird das reliefartige Druckbild während des kontinuierlichen Transports des Behälters, mittels wenigstens eines Druckkopfs angebracht.

Der erfindungsgemäße Behälter ist beispielsweise eine Flasche, eine Dose, ein Becher oder eine Tube jeweils zur Aufnahme flüssiger oder pastöser Endprodukte wie Lebensmittel und umfasst ein mit dem Verfahren gemäß wenigstens einem der beschrieben Ausführungsformen aufgetragenen reliefartigen Druckbild.

Bevorzugte Ausführungsformen sind zeichnerisch dargestellt. Es zeigen jeweils schematisch:
- Fig. 1: einen Schichtaufbau gemäß einer ersten Ausführungsform;
- Fig. 2: einen Schichtaufbau gemäß einer zweiten Ausführungsform; und
- Fig. 3: einen Schichtaufbau gemäß einer dritten Ausführungsform.

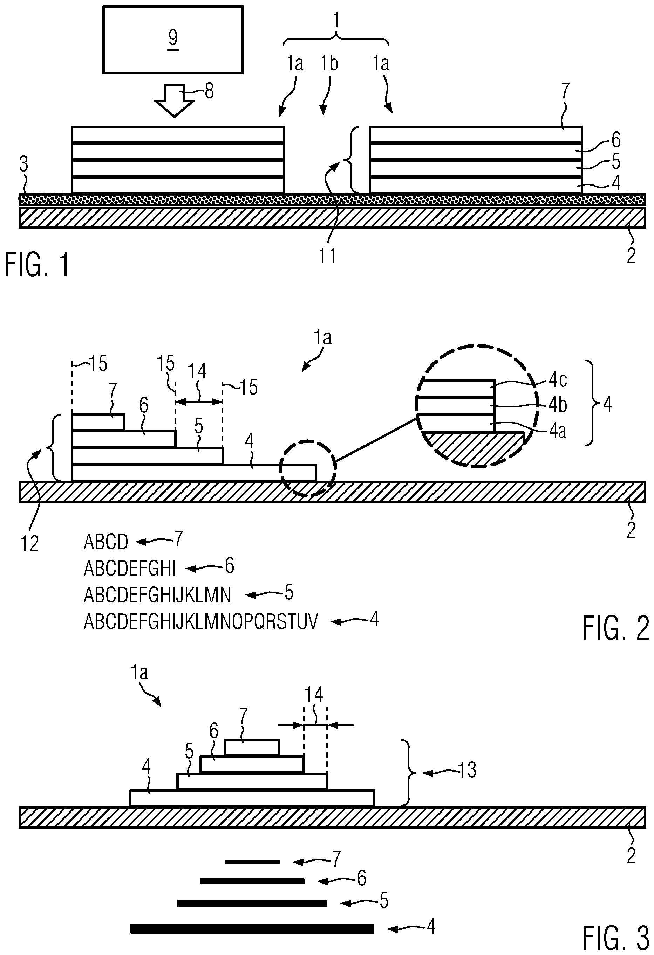

Wie die Fig. 1 erkennen lässt, wird ein reliefartiges Druckbild 1 auf einem Behälter 2 erzeugt, der beispielsweise eine Flasche, eine Dose, ein Becher oder eine Tube ist. Vom Behälter 2 ist stellvertretend nur das zu bedruckende Substrat dargestellt. Dieses kann die Oberfläche eines ebenen oder gekrümmten Wandabschnitts des Behälters 2 sein, ebenso ein darauf zuvor bereits angebrachter Basis-Aufdruck 3, wie beispielhaft dargestellt ist.

Das reliefartige Druckbild 1 umfasst wenigstens zwei Druckschichten 4-7, die durch sukzessiven Strahlauftrag einer Druckfarbe 8, einer Tinte, eines Lacks oder eines Klebers nach dem Prinzip des Tintenstrahldruckverfahrens aus wenigstens einem (lediglich schematisch angedeuteten) Druckkopf 9 aufeinandergeschichtet werden. Nachfolgend wird stellvertretend für obige Materialien nur von einer Druckfarbe 8 gesprochen.

Dadurch werden erhabene Bereiche 1a des reliefartigen Druckbilds 1 erzeugt im Gegensatz zu nicht reliefartig bedruckten Bereichen 1b des reliefartigen Druckbilds 1, an denen dann optisch und/oder haptisch nur das Substrat, also beispielsweise der Basis-Aufdruck 3 in Erscheinung tritt.

Die Erfindung zeichnet sich dadurch aus, dass die Druckschichten 4-7 jeweils im Volltondruck aufgetragen werden. Dies wird vereinfachend auch Schwarz-Weiß-Druck genannt, wobei anstelle von Schwarz beliebige andere Farben aufgedruckt werden können. Die Farbe Weiß bezeichnet hierbei den unbedruckten Untergrund (abgeleitet von weißem Papieruntergrund) und somit die im jeweiligen Druckschritt ausgesparten, nicht mit einer Druckschicht 4-7 versehenen Bereiche des Druckbilds 1. Beim Volltondruck / Schwarz-Weiß-Druck gibt es im Gegensatz zum Halbtondruck bekanntermaßen keine Grauwertabstufung.

Das reliefartige Druckbild 1 kann in einem überlappend verzahnten Druckbildbereich, einem sogenannte Stitching-Bereich liegen. Die zugehörige elektronische Druckvorlage kann mit den für derartige Verzahnungen mit einem anderen Stitching-Bereich gebräuchlichen Algorithmen erstellt werden.

In der Fig.1 ist beispielhaft ein Druckkopf 9 zur Erzeugung einer der Druckschichten 4-7 des reliefartigen Druckbild 1 schematisch angedeutet. Dabei kann es sich sowohl um einen binären Druckkopf für den ausschließlichen Volltondruck als auch um einen Druckkopf für den Halbtondruck handeln, der prinzipiell für die Erzeugung / den Druck von Graustufen ausgelegt ist.

Der binäre Druckkopf 9 druckt bauartbedingt durchweg, also über die gesamte Druckdauer, nur mit einer einheitlichen Tropfengröße. Diese kann für das Prinzip des Tintenstrahldrucks als alternative Definition für den Volltondruck / Schwarz-Weiß-Druck angesehen werden.

Druckköpfe 9 für den Halbtondruck, also solche, die Graustufen drucken könnten, werden im beschriebenen Tintenstrahldruckverfahren mit einer für das gesamte Druckbild jeweils einheitlich eingestellten (örtlich und zeitlich unveränderten) Tropfengröße betrieben, beispielsweise mit maximaler Tropfengröße.

Die Tropfengröße der Druckfarbe 8 kann durch die Druckdaten (Druckvorlage) oder durch davon unabhängige Steuerung des jeweiligen Druckkopfs 9 auf prinzipiell bekannte Weise vorgegeben werden, beispielsweise durch ein dafür zuständiges Spannungssignal (Waveform). Damit wird die Graustufenfunktion derartiger Druckköpfe 9 gezielt aufgehoben. Diese werden so auf einen Volltondruck / Schwarz-Weiß-Druck eingeschränkt.

Grundsätzlich wäre eine solche Vorgehensweise auch bei anderen Druckverfahren für Behälter denkbar, beispielsweise für einen Siebdruck unter Verwendung UV-härtender Farben oder anderer industriell druckbarer Materialien. In Analogie zur einheitlichen Tropfengröße könnte beim Siebdruck eine einheitliche Maschenweite verwendet werden.

Vorzugsweise wird ein und dieselbe Druckfarbe 8 für die einzelnen Druckschichten 4-7 verwendet. Prinzipiell wären aber auch unterschiedliche Druckfarben 8 denkbar.

Der Schichtaufbau 11-13 des reliefartigen Druckbilds 1 ist auf unterschiedliche Weise wie folgt möglich.

In der Fig. 1 ist der Schichtaufbau 11 in einer ersten Variante dargestellt. Demnach können wenigstens zwei, insbesondere wenigstens drei Druckschichten 4-7 mit übereinstimmender Kontur und Lage im Druckbild, also mit identischen Flächenabmessungen und deckungsgleich, aufeinander gedruckt werden. Eine größere Anzahl derartig angeordneter Druckschichten 4-7 ist generell möglich.

Die Eigenschaften der Druckfarbe 8, wie beispielsweise deren Viskosität und/oder Temperatur, die Eigenschaften des Substrats, wie beispielsweise dessen Oberflächenbeschaffenheit, und die Abmessungen der erhabenen Bereiche 1a, also deren Flächeninhalt und relative Höhe, können beim beschriebenen Verfahren auf prinzipiell bekannte Weise berücksichtigt werden.

In der Fig. 2 und 3 sind der Schichtaufbau 12, 13 gemäß einer zweiten bzw. dritten Variante schematisch dargestellt. Demnach können die Druckschichten 4-7 mit von der Basis des erhabenen Bereichs 1a ausgehend nach oben hin stufenartig kleiner werdenden Konturen / Flächenabmessungen aufeinandergeschichtet werden.

Hierbei sind Stufenbreiten 14 zwischen den jeweils benachbarten Konturgrenzen 15 der Druckschichten 4-7 von beispielsweise mehreren Millimetern oder Zentimetern möglich, um dekorative Elemente oder Schriftfelder optisch und/oder haptisch voneinander abzusetzen. Solche unterschiedlich großen Schriftfelder für die einzelnen Druckschichten 4-7 sind im unteren Bereich der Fig. 2 in einer vereinfachten Draufsicht beispielhaft angedeutet.

Kleinere Stufenbreiten 14, beispielsweise im Bereich von 1-50 Pixeln (Druckbildpunkten) eignen sich für das optische und/oder haptische Hervorheben von Linien, Symbolen und Schriftzeichen. Hierfür verwendete unterschiedlich breiten Linien im Sinne eines optional abgestuften Fettdrucks sind im unteren Bereich der Fig.3 für die einzelnen Druckschichten 4-7 in einer vereinfachten Draufsicht beispielhaft angedeutet.

Zudem verlaufen die Tinten in der Regel nach dem Auftrag. Durch einen abgestuften Auftrag mit nach oben hin kleiner werdenden Schichtabmessungen, siehe oben, können die einzelnen Elemente des Druckbilds möglichst fein und beispielsweise gut lesbar gehalten werden. Es kann also ein unerwünschter Fettdruck und/oder ein Zusammenlaufen von Buchstaben oder dergleichen Elementen des Druckbilds vermieden werden.

In der Fig. 2 ist zudem schematisch zu erkennen, dass einzelne oder alle Druckschichten 4-7 aus wenigstens zwei identischen Einzelschichten 4a-4c aufgebaut werden können. In diesem Fall werden sowohl die Druckschichten 4-7 als auch die Einzelschichten 4a-4c jeweils mit einheitlicher Tropfengröße gedruckt.

Prinzipiell sind beliebige Kombinationen aus Druckschichten 4-7 und diese gegebenenfalls auch unterschiedlich aufbauenden Einzelschichten 4a-4c denkbar. Im Grunde genommen sind derartige Kombinationen lediglich vorrichtungsseitig begrenzt, beispielsweise wenn jeder Druckschicht 4-7 oder Einzelschicht 4a-4c ein separater Druckkopf 9 zugeordnet ist.

Ebenso sind beliebige Kombinationen des ersten bis dritten Schichtaufbaus 11-13 möglich, beispielsweise teilweise deckungsgleiche Konturgrenzen 15 (Fig. 2, rechts) und teilweise abgestuft versetzte Konturgrenzen 15 (Fig. 2, links).

Das reliefartige Druckbild 1 kann sowohl direkt auf das jeweilige Substrat (Behälterwand) mit oder ohne Vorbeschichtung / Vorbehandlung gedruckt werden, als auch auf einen zuvor dort aufgedruckten Basis-Aufdruck 3. Hierbei ist prinzipiell ein Schichtaufbau 11-13 mit Druckschichten 4-7 in einer oder mehreren Farben möglich. Mit dem reliefartigen Druckbild 1 lassen ich auf farbigen Basis-Aufdrucken 3 besonders interessante optische Effekte und Designs erzeugen. Bei einer Vorbehandlung könnte man optional beispielsweise eine dünne Silan-Schicht mitaufbringen.

Lage und Kontur der erhabenen Bereiche 1a im reliefartigen Druckbild 1, also die für den Vollton-Farbauftrag vorgesehenen Stellen auf dem Substrat, werden durch Druckdaten und Substratdaten rechnergestützt vorgegeben. Druckdaten bei abgestuften Konturen / Flächenabmessungen der einzelnen Druckschichten 4-7 können entweder automatisiert oder durch manuelle Eingabe mittels Bildbearbeitungsprogrammen angepasst werden.

Als Druckfarben 8 können Weiß, Schwarz, Buntfarben (üblicherweise CMYK und spezielle anwenderspezifische Sonderfarben, beispielsweise gemäß Pantone-Skala), Klarlack und/oderfunktionale (beispielsweise leitfähige, magnetische, fluoreszierende oder phosphoreszierende) Tinten verwendet werden.

Es handelt sich vorzugsweise jeweils um UV-aushärtende Druckfarben 8.

Typische Druckgeschwindigkeiten betragen beispielsweise 100 bis 1200 mm/s.

Die Druckschichten 4-7 können zwischengehärtet werden, wobei dies in der Regel nicht nach jedem einzelnen Schichtauftrag erforderlich ist. Bewährt hat sich bei UV-härtenden Druckfarben 8 eine Zwischenhärtung nach jedem zweiten oder dritten Druckschritt (Druckschicht 4-7).

Anzahl und Art der Härtungsschritte hängen von der jeweils verwendeten Druckfarbe 8 ab und können auf prinzipiell bekannte Weise daran angepasst werden.

Mit dem beschriebenen Verfahren kann beispielsweise wie folgt gearbeitet werden:
Die zu bedruckenden Behälter 2 werden vorzugsweise auf einem Behälterkarussell oder einem anderen Transportmittel durch den Arbeitsbereich stationär angeordneter Druckköpfe 9 transportiert. Die Behälter werden so auf prinzipiell bekannte Weise für einen Direct-To-Shape-Druck bzw. ein digitales Tintenstrahldruckverfahren für dreidimensionale Objekte, bei der Anwendung an Behältern auch Direktdruck genannt, positioniert.

An jedem der Druckköpfe 9 wird die Druckfarbe 8 auf der Grundlage einer elektronischen Druckvorlage derart ausgestoßen, dass jeweils eine Druckschicht 4-7 in den für die Erzeugung der erhabenen Bereiche 1a vorgesehenen Wandbereiche der Behälter 2 im Volltondruck erzeugt wird. Die einzelnen Druckschichten 4-7 werden entsprechend wenigstens einer der voranstehend beschriebenen Schichtaufbauten 11-13 während des kontinuierlichen Weitertransports der Behälter 2 aufeinandergeschichtet.

Gegebenenfalls werden einzelne oder Gruppen von Druckschichten 4-7 mittels UV-Bestrahlung zwischengehärtet und nach vollständigem Schichtaufbau 11-13 zum erhabenen Bereich 1a endgehärtet.

Der Volltondruck wird vorrichtungsseitig entweder durch Verwendung ausschließlich dafür ausgelegter Druckköpfe 9 oder durch entsprechende steuerungstechnische Einschränkung für den Halbtondruck ausgelegter Druckköpfe 9 implementiert.

Das Verfahren ist voranstehend für den digitalen Tintenstrahldruck (Direktdruck) des reliefartigen Druckbilds 1 auf einen Behälter 2 beschrieben. Denkbar ist aber auch, das reliefartige Druckbild 1 in den beschriebenen Varianten auf Flachsubstraten zu erzeugen, beispielsweise auf Etiketten, Flachgläsern, Folien oder Blechen, die beispielsweise Bestandteile von Dosen sein können (jeweils nicht dargestellt). Beispielsweise werden derart bedruckte Etiketten dann anschließend an Behältern 2 auf prinzipiell bekannte Weise angebracht.

## Patentansprüche

1. Verfahren zum Erzeugen eines reliefartigen Druckbilds (1) auf Behältern (2), wobei Druckschichten (4-7) mittels Strahlauftrag einer Druckfarbe (8), einer Tinte, eines Lacks und/oder eines Klebers aus wenigstens einem Druckkopf (9) auf einem Behälter aufeinandergeschichtet und dadurch erhabene Bereiche (1a) des Druckbilds erzeugt werden, **dadurch gekennzeichnet, dass** die Druckschichten jeweils im Volltondruck aufgetragen werden.

2. Verfahren nach Anspruch 1, wobei für wenigstens zwei der Druckschichten (4-7), insbesondere für alle Druckschichten, die gleiche Tropfengröße vorgegeben ist / eingestellt wird.

3. Verfahren nach Anspruch 1 oder 2, wobei das Druckbild (1) mit einem ersten Schichtaufbau (11, 12) hergestellt wird, bei dem wenigstens zwei der Druckschichten (4-7), insbesondere alle Druckschichten, eine deckungsgleiche Kontur aufweisen.

4. Verfahren nach einem der vorigen Ansprüche, wobei das Druckbild (1) mit einem zweiten Schichtaufbau (12, 13) hergestellt wird, bei dem die Kontur insbesondere aller aufeinanderliegender Druckschichten (4-7) sukzessive stufenartig kleiner wird.

5. Verfahren nach Anspruch 4, wobei die Druckschichten (4-7) derart nacheinander aufgetragen werden, dass die Abstände zwischen ihren Konturgrenzen (15) jeweils 1 bis 20 mm oder jeweils 1 bis 50 Pixel betragen.

6. Verfahren nach wenigstens einem der vorigen Ansprüche, wobei wenigstens eine der Druckschichten (4) sukzessive aus mehreren identischen Einzelschichten (4a-4c) aufgebaut wird.

7. Verfahren nach wenigstens einem der vorigen Ansprüche, wobei die Druckschichten (4-7) mittels eines Binär-Druckkopfs und/oder mittels eines auf Volltondruck eingestellten Halbton-Druckkopfs hergestellt werden.

8. Verfahren nach wenigstens einem der vorigen Ansprüche, wobei jede Druckschicht (4-7) mit wenigstens einem separat zugeordneten Druckkopf (9) erzeugt wird.

9. Verfahren nach wenigstens einem der vorigen Ansprüche, wobei die Druckschichten (4-7) mittels UV-Licht insbesondere aus wenigstens einer LED gehärtet werden.

10. Verfahren nach wenigstens einem der vorigen Ansprüche, wobei die Druckschichten (4-7) auf einem auf dem Behälter (2) vorhandenen ebenen Basis-Aufdruck (3) aufgetragen werden.

11. Verfahren nach Anspruch 10, wobei die Druckschichten (4-7) einen Kontrast, insbesondere einen Farbkontrast und/oder Dickenkontrast, zum Basis-Aufdruck (3) erzeugen.

12. Verfahren nach wenigstens einem der vorigen Ansprüche, wobei die Druckschichten (4-7) auf einer am Behälter (2) reliefartig ausgebildeten Oberflächenstruktur aufgetragen werden.

13. Verfahren nach wenigstens einem der vorigen Ansprüche, wobei die erhabenen Bereiche (1a) durch Überlagerung der Druckschichten (4-7) auf eine Gesamtschichtdicke von 50 µm bis 5 mm, insbesondere von 0,1 bis 2 mm, hergestellt werden.

14. Verfahren nach wenigstens einem der vorigen Ansprüche, wobei das reliefartige Druckbild (1) während des kontinuierlichen Transports des Behälters (2), mittels wenigstens eines Druckkopfs (9) angebracht wird.

15. Behälter (2), insbesondere Flasche, Dose, Tube oder Becher, zur Aufnahme flüssiger Endprodukte wie Lebensmittel, mit einem mit dem Verfahren nach wenigstens einem der vorigen Ansprüche aufgetragenen reliefartigen Druckbild (1).
